# EUROPÄISCHE PATENTSCHRIFT

(11) **EP 2 980 882 B1**
(45) Veröffentlichungstag und Bekanntmachung des Hinweises auf die Patenterteilung: **15.05.2019**
(21) Anmeldenummer: 14002624.6
(22) Anmeldetag: 28.07.2014
(51) Int. Cl.: H01M 2/10, H01M 10/04, H01M 10/613, H01M 10/625, H01M 10/647, H01M 10/6556, H01M 10/6567, H01M 10/6568

(54) **RAHMEN FÜR ELEKTROCHEMISCHE ZELLEN**
FRAME FOR ELECTROCHEMICAL CELLS
CADRE POUR DES CELLULES ÉLECTROCHIMIQUES

(43) Veröffentlichungstag der Anmeldung: 03.02.2016
(73) Patentinhaber: Carl Freudenberg KG, 69469 Weinheim (DE)
(72) Erfinder: Kritzer, Peter, 67147 Forst (DE); Nahrwold, Olaf, 67071 Ludwigshafen (DE); Gattringer, Rudolf, 4284 Tragwein (AT)

(56) Entgegenhaltungen:
- EP-A1- 2 608 309
- WO-A1-2009/128220
- WO-A1-2013/037742
- DE-A1-102009 016 576
- DE-U1-202011 052 087

## Beschreibung

### Technisches Gebiet

Die Erfindung betrifft einen Rahmen nach dem Oberbegriff des Patentanspruchs 1.

### Stand der Technik

Ein solcher Rahmen ist bereits aus der EP 2 432 043 A1 sowie aus der EP 2 608 309 A1 bekannt.

Zellen in einem Batteriesystem, insbesondere einem Lithium-Batteriesystem, sind üblicherweise als Rundzellen, prismatische Zellen oder Pouch-Zellen ausgebildet. Pouch-Zellen weisen Zellengehäuse aus Folien auf.

Aufgrund der Vorteile der Pouch-Zellen gegenüber prismatischen Zellen, insbesondere deren geringeren Produktionskosten, finden Pouch-Zellen bereits ausschließliche Anwendung in Mobiltelefonen, Digitalkameras oder in Automobilen. Pouch-Zellen finden insbesondere in Elektrofahrzeug-Batterien Verwendung.

Ein wesentlicher technischer Vorteil von Pouch-Zellen ist deren Adaptionsmöglichkeit auf zukünftige Zellchemiekonzepte.

So führen beispielsweise neue Anodenmaterialien, insbesondere auf Silizium-Basis, welche eine stark erhöhte Lithium-Aufnahmekapazität und daher erhöhte Energiedichte gegenüber den derzeit üblichen Graphit-Anoden aufweisen, zu einer stark erhöhten Volumenarbeit beim Zyklisieren.

Dies führt bei prismatischen Zellen zu einer starken Ausbauchung des festen Zellengehäuses, womit mechanische Probleme und Dichtigkeitsprobleme einhergehen. Bei Pouch-Zellen hingegen kann diese Volumenarbeit durch das flexible Zellengehäuse aus Folien ausgeglichen werden.

Darüber hinaus können manche Zellen in einem Batteriesystem nicht auf Stoß nebeneinander platziert werden. Ein zusätzliches Abstandselement, nämlich ein sogenannter Spacer, zwischen den Zellen ist daher notwendig.

Rahmen zur Fixierung von Pouch-Zellen oder auch für Brennstoffzellen sind insbesondere aus der EP 2 432 043 A1 bekannt. Des Weiteren sind Rahmen bekannt, welche Kanäle aufweisen, durch welche Kühlmedien strömen können. Die US 2012/0040223 A1 oder die US 2011/0293982 A1 zeigen solche Rahmen.

Rahmen zur Fixierung von Pouch-Zellen müssen eine Abdichtung derer Siegelnähte sicher stellen. Überdies muss sicher gestellt sein, dass ein gerichtetes Abblasen des Elektrolyten im Schadensfall erfolgt, wobei auch sicher gestellt sein muss, dass freigesetzte brennbare Gase nicht mit stromführenden Teilen in Kontakt kommen können.

Es muss überdies ein Toleranzausgleich in einem sogenannten Stack gegeben sein. Vibrationen, die auf eine Zelle einwirken, müssen reduziert werden. Außerdem muss ein Kühlkreislauf an den Rahmen angebunden sein.

Es besteht überdies ein Bedarf nach einer verbesserten Fixierung und einer mechanischen Pufferung der Elektroden.

Des Weiteren muss eine Vibrationsresistenz bzw. Schockresistenz eines Stacks gegeben sein. Dies ist besonders bei Batteriesystemen relevant, die in Automobilen, insbesondere Elektrofahrzeugen, Hybridfahrzeugen, Nutzfahrzeugen, Bussen oder Lastkraftwagen verwendet werden.

Die Vibrationsresistenz muss auch in sonstigen mobilen Applikationen wie in Bahnen, Flugzeugen oder Arbeitsmaschinen gegeben sein.

Die Vibrationsresistenz ist im laufenden Betrieb notwendig. Insbesondere bei PKW-Applikationen ist in der Regel das Batteriegehäuse nicht elastisch und damit nicht vibrationsresistent gelagert. Die Komponenten des Batteriesystems müssen daher eine hohe Vibrationsresistenz aufweisen. Eine Resistenz gegen mechanische Schläge, typische Anforderungen sind Beschleunigungen bis über 100 g, macht sich vor allem bei Unfällen bemerkbar.

In allen Fällen muss sicher gestellt werden, dass im Kühlkreislauf keine Leckage auftritt. Falls dies geschehen sollte, kann Kühlmedium, beispielsweise Wasser, mit stromführenden Teilen in Kontakt kommen.

Zudem besteht in diesem Fall bei einer Zellöffnung das Risiko, dass das Kühlmedium mit freigelegten Zellbestandteilen, beispielweise Lithium, in Kontakt tritt. Dies kann schwerwiegende Folgen mit sich bringen. Es kann zur Freisetzung von Wasserstoff kommen.

Die Effizienz sowie Homogenität der Kühlung stellt eine besondere Herausforderung im Hinblick auf die Langzeitstabilität der elektrochemischen Zellen dar. Zu hohe oder zu tiefe Temperaturen können zu vorzeitiger Alterung der Zellen führen. Eine inhomogene Temperierung kann zu ungleichmäßiger Alterung der Zellen und damit zu nachlassender Leistung des Gesamtsystems führen.

### Darstellung der Erfindung

Der Erfindung liegt daher die Aufgabe zu Grunde, einen Rahmen anzugeben, welcher in einer Anordnung leicht montierbar ist und die in der Anordnung aufgenommenen Zellen bei hoher Betriebstauglichkeit möglichst optimal schützt.

Erfindungsgemäß wird die voranstehende Aufgabe durch die Merkmale des Patentanspruchs 1 gelöst.

Erfindungsgemäß ist zunächst erkannt worden, dass Kühlkanäle in Rahmen integriert sein müssen, wobei die Kühlkanäle als auf der einen Seite eines ersten Rahmens hervorstehende und in die andere Seite eines zweiten benachbarten Rahmens hineinragende Steckstücke vorliegen können. Solche Steckstücke können männliche Teile in Form von Stutzen und/ oder weibliche Teile in Form von Aussparungen aufweisen.

Hierdurch wird - insbesondere durch aus der Ebene des Rahmens teilweise herausstehenden Steckstücke - eine mechanisch überraschend stabile und dichte Verbindung sichergestellt. Diese Verbindung hält insbesondere Vibrationen und mechanischen Stößen gut stand.

Darüber hinaus können mechanische Spannungen, welche beispielsweise durch Temperaturwechsel hervorgerufen werden, ausgeglichen werden. Die so hergestellte Anordnung erlaubt zudem einen Toleranzausgleich von Fertigungstoleranzen. Durch das Hineinragen der Stutzen in den jeweiligen benachbarten Rahmen sind die Rahmen fest miteinander verbunden und tragen damit zur mechanischen Stabilität eines Stacks bei. So kann auf zusätzliche separate Verbindungsstücke in der Regel verzichtet werden.

Eine solche Rahmen umfassende Anordnung benötigt daher vergleichsweise wenige Komponenten. Es besteht zunächst keine Notwendigkeit, Rohre oder Kühlbleche vorzusehen. Eine Anordnung lässt sich einfach fertigen und zeitsparend montieren. Es ist ausgeschlossen, dass einzelne wesentliche Bauteile bei der Montage vergessen werden. Dies kann durch ein Poka-Yoke-Prinzip realisiert sein.

Insoweit ist ein Rahmen angegeben, welcher in einer Anordnung leicht montierbar ist und die in der Anordnung aufgenommenen Zellen bei hoher Betriebstauglichkeit möglichst optimal schützt.

Folglich ist die eingangs genannte Aufgabe gelöst.

Das Steckstück könnte zumindest teilweise derart aus der Rahmenebene herausragen, dass es in eine komplementäre Öffnung eines Steckstücks eines benachbarten Rahmens hineinragen kann. So weist der Rahmen Steckstücke zwischen sich und einem benachbarten Rahmen auf, durch welche Kühlmedien fließen können.

Das Steckstück könnte einen runden oder rechteckigen Querschnitt aufweisen. Runde Steckstücke sind leicht zu fertigen, rechteckige führen zu einer besseren Rahmennutzung.

Das Steckstück könnte einen männlichen Teil und einen weiblichen Teil aufweisen, wobei der männliche Teil geeignet ist, in den weiblichen Teil eines benachbarten Rahmens eingeführt zu werden und wobei der weibliche Teil geeignet ist, den männlichen Teil eines benachbarten Rahmens aufzunehmen. So kann jeder Rahmen eines Stacks oder einer Anordnung identisch und zugleich komplementär zu einem anderen Rahmen ausgebildet sein.

Das Steckstück muss zumindest eine Dichtung aufweisen. Hierdurch wird verhindert, dass eine Flüssigkeit aus einem Kühlkanal austritt. Auf den Steckstücken muss eine Dichtung angebracht sein. Die Dichtung könnte auf dem männlichen Teil des Steckstücks und/ oder auf dem weiblichen Teil des Steckstücks angeordnet sein. Als Dichtungsmaterial könnte ein Elastomer, bevorzugt EPDM, VMQ, HNBR, FKM oder Butylkautschuk, verwendet werden. Für einfachere Anwendungen könnten auch thermoplastische Elastomere verwendet werden.

Das Steckstück und die Dichtung könnten einstückig ausgebildet sein. Der Rahmen und die Dichtungen könnten so in einem Bauteil realisiert sein. Dies ist durch ein Zwei-Komponenten-Verfahren realisierbar.

Die Dichtung könnte O-Ringe oder Einlegeteile aufweisen. Der Rahmen und die Dichtungen könnten nach der Herstellung assembliert werden, wobei die Dichtungen als Einlegeteile wie O-Ringe ausgestaltet sind.

Das Steckstück muss eine Dichtung aufweisen, die radial abdichtet. So erfolgt eine Abdichtung ausschließlich radial oder axial und radial. An Stutzen und/oder Aussparungen eines Steckstücks oder eines Rahmens könnten Dichtungen angebracht sein. Die Dichtungen sind bevorzugt radial und axial wirkend angeordnet, jedoch zumindest radial wirkend.

Die Steckstücke sind so ausgestaltet, dass sie zumindest einen radialen Dichtungsanteil aufweisen, damit ein möglichst hoher

Toleranzausgleich sicher gestellt ist. Toleranzen können durch Fertigung, Wärmedehnung oder erforderliche Vibrations-Resistenzen entstehen.

Darüber hinaus können sie auch einen axialen Dichtungsanteil aufweisen, was zusätzliche Sicherheit gibt. Ein mehrlippiges Design einer Dichtung verbessert die Zuverlässigkeit.

Eine Dichtung könnte mehrere Teildichtungen umfassen, nämlich mehrlippig ausgestaltet sein. Hierdurch wird die Dichtwirkung erhöht und die Abdichtung sehr sicher, da eine Teildichtung ausfallen und der Ausfall durch eine andere kompensiert werden kann.

Bei Verwendung eines Dichtungsmaterials für die Zellendichtung und die Dichtung der Steckstücke, ist es möglich, die Dichtungen in einem Prozessschritt aufzubringen. Thermisch leitfähige Materialien für den Rahmen und/ oder Dichtungsmaterialien verbessern den Wärmeübergang und sind daher bevorzugt.

Der Rahmen könnte in Abhängigkeit vom Kühlmedium Drücken bis maximal 10 bar, bevorzugt bis maximal 30 bar, besonders bevorzugt bis maximal 130 bar standhalten. Der Rahmen könnte derart ausgelegt sein, dass er Drücken bis max. 10 bar standhält, falls Wasser oder ein wasser-basiertes Kühlmedium verwendet wird. Der Rahmen könnte derart ausgelegt sein, dass er Drücken bis max. 30 bar stand hält, falls als Kühlmedien fluorierte oder teilfluorierte organische Medien einer Klimaanlage verwendet werden. Der Rahmen könnte derart ausgelegt sein, dass er Drücken bis max. 130 bar stand hält, falls als Kühlmedium Kohlendioxid verwendet wird. Bei hohen Drücken ist die Verwendung von Rohren, die in die Steckstücke eingebracht sind, besonders bevorzugt.

Für Kühlkreisläufe auf Wasser-Glykol-Basis sollten die Dichtungen Drücken bis zu 10 bar standhalten. Als Dichtungsmaterialien für Teile, die mit Kühlflüssigkeit in Kontakt stehen, kommen Materialien mit geringer Wasserpermeation, beispielsweise EPDM, FKM, HNBR oder Butyl-Kautschuk, in Frage.

Bei Verwendung teilfluorierter Kühlmedien, wie z.B. R 1234yf, müssen die Dichtungen gegen innere Überdrücke bis ca. 30 bar abdichten können.

Falls Kohlendioxid als Kühlmedium verwendet wird, müssen die Dichtungen gegen innere Überdrücke bis ca. 130 bar abdichten können.

Bei einer mehrlippigen Ausgestaltung einer Dichtung oder einer geringeren Anforderung an die Gaspermeation können Dichtungsmaterialien verwendet werden, welche eine vergleichsweise hohe Permeation des Kühlmediums zulassen, beispielsweise Silikon-basierte Elastomere.

In mindestens einem Steckstück könnte ein Strömungsblech angeordnet sein. In den Steckstücken könnten Strömungsbleche angeordnet sein, welche eine auf den Rahmen gerichtete laminare oder turbulente Strömung generieren und dadurch einen Wärmeübergang und die Effizienz der Kühlung verbessern. Die angeströmte Seite ragt bevorzugt in Richtung des Zellkörpers.

Es ist eine gute Wärmeübertragung vom Kühlkanal zum Rahmen realisiert. Durch Anbringung von Strömungsblechen im Kühlkanal kann der Wärmeübergang zwischen Kühlkanal und einer Zelle weiter verbessert werden. Dies erlaubt die Verwendung von polymeren, nämlich elektrisch nicht leitfähigen, Werkstoffen. Dies erlaubt zudem, eine geringere Durchflussmenge an Kühlmedium zu realisieren. Die Durchmesser von Kühlkanälen können dadurch verringert werden bzw. bei gleichem Durchmesser kann die Kühleffizienz gesteigert werden.

In mindestens einem Steckstück könnte eine Strömungsfläche angeordnet sein. In den Steckstücken könnte eine Strömungsfläche ausgebildet sein, auf welche die Strömung geleitet wird.

Die Strömungsfläche könnte eine erhöhte Rauigkeit aufweisen.

Die Strömungsfläche könnte eine erhöhte thermische Leitfähigkeit aufweisen. Dies kann beispielsweise durch ein metallisches Insert realisiert werden.

Die angeströmte Strömungsfläche könnte bevorzugt in Richtung des Zellkörpers angebracht sein.

In mindestens einem Steckstück könnte eine Wärmeleitrippe angeordnet sein. In den Steckstücken könnten Wärmeleitrippen angeordnet sein, welche eine erhöhte Wärmeübertragung von den Zellen über den Rahmen in ein Fluid ermöglichen.

In mindestens einem Steckstück könnte ein Verclipsungselement ausgebildet sein. Es könnten Verclipsungselemente in den Steckstücken ausgebildet sein, die beim Zusammenstecken der Rahmen zu einer zusätzlichen Arretierung führen.

Ein Steckstück könnte mit innen angebrachten Verstrebungen mechanisch stabilisiert sein. Hierdurch wird das Steckstück stabilisiert.

Eine Anordnung könnte mindestens zwei Rahmen der hier beschriebenen Art umfassen, wobei zwischen den Rahmen eine Zelle angeordnet ist, wobei ein männliches Teil eines ersten Steckstücks in ein weibliches Teil eines zweiten Rahmens hineinragt und wobei durch die Steckstücke ein Kühlkanal für ein Kühlmedium geführt ist. Ein Stack oder Modul könnte aus zwei oder mehreren Zellen oder Rahmen bestehen.

Eine Dichtung, die an einem männlichen und/ oder weiblichen Teil angeordnet ist, könnte im Krafthauptschluss oder im Kraftnebenschluss liegen.

Durch die Steckstücke könnte mindestens ein Rohr geführt sein, in welchem der Kühlkanal ausgebildet ist. Kühlmedium führende Rohre könnten durch Öffnungen der Steckstücke geführt sein. Bei hohen Drücken ist die Verwendung von Rohren, die in die Steckstücke eingebracht sind, besonders bevorzugt.

Ein Rohr könnte durch je eine Öffnung eines Steckstücks geführt sein, wobei zwischen dem Rohr und der Innenwand mindestens einer Öffnung ein toleranzausgleichendes Mittel angeordnet ist. Kühlmedium führende Rohre könnten durch die Öffnungen der Steckstücke geführt sein, wobei die Innenwand der Öffnungen mit einem toleranzausgleichenden Material beaufschlagt sind.

Ein externes Gehäuse könnte Teil eines Kühlkanals sein, wobei ein Steckstück eines letzten Rahmens in eine Bohrung des Gehäuses eingeführt ist. Es könnte ein externes Gehäuse in einen Kühlkanal einbezogen werden, wobei das Steckstück des letzten Rahmens in eine Bohrung des Gehäuses eingeführt wird.

Ein Batteriesystem könnte eine Anordnung der hier beschriebenen Art umfassen. Ein Batteriesystem könnte einen Stack und mindestens zwei Rahmen der hier beschriebenen Art umfassen. Der hier beschriebene Rahmen dient der Fixierung von elektrochemischen Energiespeicher-Zellen mit flexiblem Zellen-Design, insbesondere Pouch-Zellen, Lithium-lonen-Zellen oder Lithium-Schwefel-Zellen.

Der Rahmen könnte fest sein und eine umlaufende, reversibel komprimierbare Zellendichtung aufweisen. Eine solche Zellendichtung kann im überwiegenden Teil ihres Umfangs auf die Siegelnaht einer Pouch-Zelle pressen. Hierdurch wird die Zelle elastisch gegen den Rahmen gelagert. Auf beiden Seiten eines Rahmens kann eine solche Zellendichtung vorgesehen sein.

Der hier beschriebene Rahmen eignet sich besonders für Batteriesysteme mit Pouch-Zellen, welche gut und homogen temperiert werden müssen, für Systeme, die zusätzlich mechanischen Vibrationen ausgesetzt sind, insbesondere mobile Applikationen wie Autos, Nutzfahrzeuge, Bahnen, Flugzeuge, "off-highway" Applikationen wie Materialbewegungsfahrzeuge, Baumaschinen, Traktoren, unbemannte Roboter, für Systeme, die einen besonders hohen Energiedurchsatz aufweisen, was zum einen eine erhöhte Kühlung erfordert, zum anderen zu einer hohen Frequenz der Dickenänderung der Zellen führt.

Neben den zuvor genannten Anwendungen betrifft dies zudem stationäre Systeme wie Batterien zur Netzfrequenz-Stabilisierung oder Back-up Applikationen oder Batteriesysteme mit Anoden- / Kathoden-Materialien, welche einer besonders hohen Volumenarbeit beim Zyklisieren unterliegen.

### Kurzbeschreibung der Zeichnung

In der Zeichnung zeigen
- Fig. 1: eine Pouch-Zelle mit einem abragenden Folien-Stromableiter,
- Fig. 2: zwei Ansichten eines Rahmens, in welche Bohrungen für Kühlkanäle dargestellt sind
- Fig. 3: eine Anordnung, nämlich ein Stack, aus Pouch-Zellen, zwischen denen Rahmen angeordnet sind,
- Fig. 4: eine weitere Ansicht eines Rahmens, in welchen runde Steckstücke integriert sind, welche aus der Ebene des Rahmens herausragen
- Fig. 5: eine weitere Ansicht eines Rahmens, in welchen runde Steckstücke integriert sind, welche aus der Ebene des Rahmens herausragen
- Fig. 6: eine Schnittansicht eines im Rahmen integrierten runden Steckstücks,
- Fig. 7: eine Ansicht eines Rahmens in welchen annähernd rechteckige Steckstücke integriert sind, welche aus der Ebene des Rahmens herausragen
- Fig. 8: eine Schnittansicht eines im Rahmen integrierten annähernd rechteckigen Steckstücks in Querrichtung zum Rahmen,
- Fig. 9: eine Schnittansicht eines im Rahmen integrierten annähernd rechteckigen Steckstücks, in Längsrichtung des Rahmens,
- Fig. 10: eine Schnittansicht eines Steckstücks, an dessen männlichem Teil radial und axial wirkende Teildichtungen angeordnet sind,
- Fig. 11: eine Schnittansicht eines Steckstücks, an dessen weiblichem Teil radial und axial wirkende Teildichtungen angeordnet sind,
- Fig. 12: eine Schnittansicht zweier Steckstücke, wobei am männlichen Teil eines ersten Steckstücks eine axial wirkende Teildichtung und am weiblichen Teil eines zweiten Steckstücks zwei radial wirkende Teildichtungen angeordnet sind,
- Fig. 13: eine Schnittansicht zweier Steckstücke, wobei am männlichen Teil eines ersten Steckstücks zwei radial wirkende Teildichtungen und am weiblichen Teil eines zweiten Steckstücks eine axial wirkende Teildichtung angeordnet sind,
- Fig. 14: eine Schnittansicht zweier gleicher Steckstücke, wobei am männlichen Teil eines Steckstücks zwei radial wirkende Teildichtungen und am weiblichen Teil des Steckstücks keine Teildichtungen angeordnet sind,
- Fig. 15: eine Schnittansicht zweier gleicher Steckstücke, wobei am männlichen Teil eines Steckstücks zwei radial wirkende Teildichtungen und eine axial wirkende Teildichtung und am weiblichen Teil des Steckstücks keine Teildichtungen angeordnet sind,
- Fig. 16: eine Schnittansicht eines Steckstücks, wobei am männlichen Teil eines Steckstücks zwei radial wirkende Teildichtungen und eine axial wirkende Teildichtung angeordnet sind und wobei axial und radial wirkende Rippen vorgesehen sind, die je einen Anschlag ausbilden,
- Fig. 17a: eine Schnittansicht eines Steckstücks, wobei am männlichen Teil eines Steckstücks zwei radial wirkende Teildichtungen und eine axial wirkende Teildichtung angeordnet sind und wobei nach radial innen ragend ein Strömungsblech ausgebildet ist,
- Fig. 17b: eine Schnittansicht eines Steckstücks, wobei am männlichen Teil eines Steckstücks zwei radial wirkende Teildichtungen und eine axial wirkende Teildichtung angeordnet sind und wobei nach radial innen ragend ein Strömungsblech ausgebildet ist, und wobei auf der Anströmfläche eine Fläche angebracht ist, welche die Wärmeübertragung verbessert,
- Fig. 18: eine Schnittansicht zweier gleicher Steckstücke, wobei am männlichen Teil eines Steckstücks zwei radial wirkende Teildichtungen und eine axial wirkende Teildichtung und am weiblichen Teil des Steckstücks keine Teildichtungen angeordnet sind und wobei die Steckstücke von einem Rohr durchgriffen sind,
- Fig. 19: eine Schnittansicht zweier gleicher Steckstücke, wobei am männlichen Teil eines Steckstücks zwei radial wirkende Teildichtungen und eine axial wirkende Teildichtung und am weiblichen Teil des Steckstücks keine Teildichtungen angeordnet sind, wobei die Steckstücke von einem Rohr durchgriffen sind und wobei zwischen dem Rohr und den Steckstücken als toleranzausgleichendes Mittel eine Schicht angeordnet ist,
- Fig. 20: ein wie in Fig. 7 dargestelltes annähernd rechteckig ausgeführtes Steckstück, in welchem zur Verbesserung des Wärmeübergangs in dessen Kühlkanal Wärmeleitrippen angeordnet sind,
- Fig. 21: zeigt ein zu Fig. 20 analoges Steckstück, in welchem neben Wärmeleitrippen mechanisch verstärkende Verstrebungen angeordnet sind,
- Fig. 22: zeigt einen Rahmen, in welchem die fluidführenden Kühlkanäle durch eine Gitterstruktur im Rahmen gebildet sind, wobei die Abdichtung durch innen und außen umlaufende Zellendichtungen gegeben ist.

### Ausführung der Erfindung

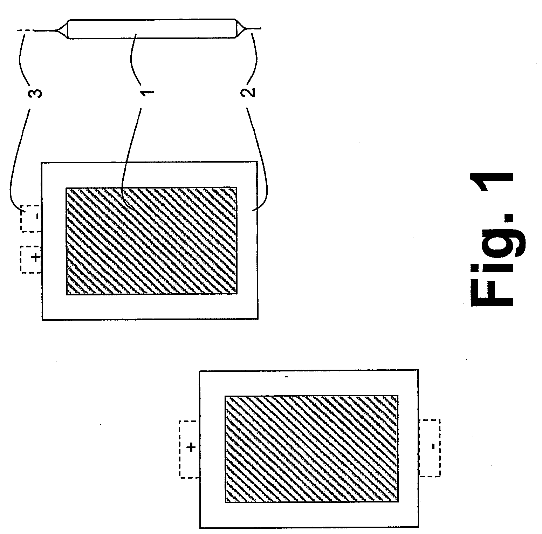

Fig. 1 zeigt zwei Pouch-Zellen, nämliche galvanische Zellen mit je einer flexiblen Hülle.

Eine solche Pouch-Zelle weist einen Zellkörper 1 auf, in welchem sich Elektroden-Separator-Schichten befinden, und eine umlaufende Siegelnaht 2, in deren Bereich eine obere und untere Deckfolie miteinander verschweißt sind.

Eine Pouch-Zelle weist zwischen den Deckfolien herausstehende und zusätzlich mit einer Folie abgedichtete Folien-Stromableiter 3 auf.

Die Folien-Stromableiter 3 können alle auf derselben Seite herausstehen, wie dies in der rechten Ansicht der Fig. 1 gezeigt ist, oder aber auf gegenüber liegenden Seiten, wie dies in der linken Ansicht der Fig. 1 gezeigt ist.

Beim Betrieb der Pouch-Zelle, nämlich beim Laden oder Entladen, ändert sich die Dicke des Zellkörpers 1 um typischerweise 5 - 10%.

Zudem ist eine gealterte Pouch-Zelle ca. 5% dicker als eine neue Pouch-Zelle. Daher ist eine gealterte und geladene Pouch-Zelle ca. 10% dicker als eine neue und ungeladene Pouch-Zelle. Bei zukünftigen Zellchemiesystemen sind sogar noch höhere Werte der Dickenänderung zu erwarten.

Besonders neue Anodenmaterialien, nämlich Silizium-basierte Materialien, welche gegenüber derzeit verwendeten Graphit-Trägern eine höhere prozentuale Einlagerungskapazität an Lithium ermöglichen, erfahren eine noch höhere Volumenarbeit. Bei neuen Anodenmaterialien, welche höher kapazitive Zellen erlauben, wird die Volumenarbeit der Pouch-Zellen daher immer relevanter.

Aufgrund der Flexibilität der Pouch-Zelle kommt der Kühlung eine besondere Bedeutung zu. Derzeit werden vor allem die Folien-Stromableiter 3 der Pouch-Zelle thermisch kontaktiert.

Dies hat jedoch folgende Nachteile: Es kann zur Bildung von Kondensat an stromführenden Teilen kommen. Die Folge können Kurzschlüsse sein. Aufgrund des geringen Querschnitts der Folien-Stromableiter 3 ist die Gesamtwärmemenge, die aus der Pouch-Zelle heraustransportiert werden kann, beschränkt.

Alternative Kühlkonzepte beziehen die Kontaktierung der Siegelnaht 2 der Pouch-Zellen oder auch den Bereich des Zellkörpers mit ein. Hierdurch lässt sich eine homogene und effiziente Kühlung erzielen.

Eine wesentliche Herausforderung ist dabei der Wärmetransfer von der Schnittstelle Zellkörper 1/Siegelnaht 2 zu einem Rahmen und einem Kühlkreislauf. Dies ist insbesondere eine Herausforderung, wenn der Rahmen aus Kunststoff gefertigt ist.

Hier wird nachfolgend eine Anordnung beschrieben, bei dem Kühlkanäle in einen Rahmen zur Fixierung von Zellen integriert sind.

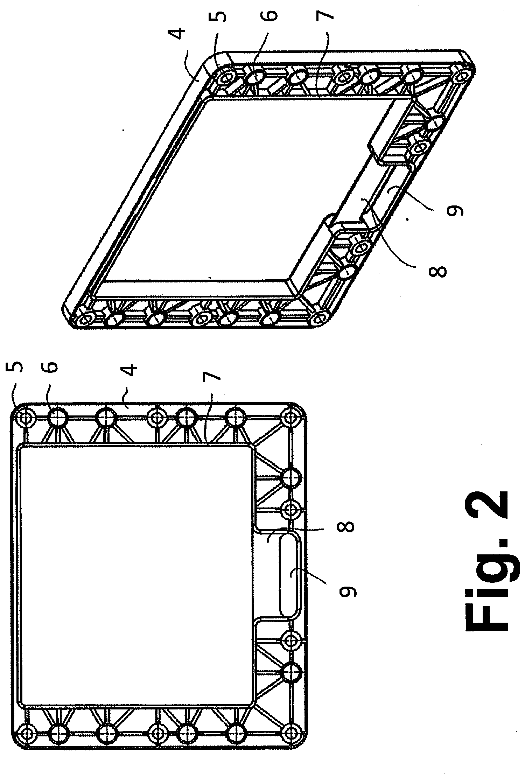

Fig. 2 zeigt in zwei Ansichten einen Rahmen für die Fixierung von Pouch-Zellen in einem Batteriegehäuse.

Dieser weist einen festen Rahmenkörper 4 und Durchführungsöffnungen 5 für Fixierstangen auf.

Außerdem sind integrierte Bohrungen 6 für Rohre vorgesehen. Es ist eine umlaufende elastomere Zellendichtung 7 vorgesehen, welche im montierten Zustand auf eine Siegelnaht 2 einer in Fig. 1 gezeigten Pouch-Zelle presst.

Des Weiteren ist eine Aussparung 8 vorgesehen, in welcher die Zellendichtung 7 nicht mit der Siegelnaht 2 der Zelle in Kontakt steht. Durch einen Abblaskanal 9 kann im Störfall aus der Zelle austretendes Gas senkrecht zur Zellenebene entweichen.

Ein solcher Rahmen kann aus Kunststoff, beispielsweise Polyamid, Polyester, PPS, anderen Thermoplasten oder auch Duroplasten, bestehen.

Vorteilhaft ist eine Verstärkung mit anorganischen Fasern, beispielsweise Glas oder Kohlenstoff, vorgesehen.

Vorteilhaft sind des Weiteren flammhemmende Eigenschaften des Materials, aus dem der Rahmen gefertigt ist. Diese Eigenschaften können durch anorganische Füllstoffe verliehen werden.

Vorteilhaft hinsichtlich Sicherheit ist zudem, wenn ein Rahmen aus einem elektrisch isolierenden Material besteht.

Vorteilhaft ist des Weiteren - besonders für thermisch beanspruchte Zellen - eine thermische Leitfähigkeit des Materials, aus dem der Rahmen gefertigt ist. Die thermische Leitfähigkeit sollte über einem Wert von 0.5 W/(m*K) liegen.

Diese Leitfähigkeit können folgende Materialien bieten:
Thermisch leitfähige Kunststoffe wie Albis Plastic // ALCOM PA66 910/30.1 TCE5 (Wärmeleitfähigkeit 5 W/(m*K)), Albis Plastic // ALCOM PA66 910/30.1 TCE10 (Wärmeleitfähigkeit 10 W/(m*K)), CoolPoly® E3607 (Wärmeleitfähigkeit 20 W/(m*K)), BASF PA 6 ; B3UGM210 (Wärmeleitfähigkeit 1 W/(m*K)) oder CoolPoly® D3612 (Wärmeleitfähigkeit 6 W/(m*K)).

Die ersten drei Materialien sind auch elektrisch leitfähig, das vierte und fünfte Material nicht.

Der Rahmen kann auch aus Metall hergestellt sein. Hierbei ist es besonders sinnvoll, Leichtbau-Designs zu realisieren.

Bei Verwendung elektrisch leitender Materialien zur Fertigung des Rahmens ist in jedem Fall darauf zu achten, dass keine Kontaktierung der Folien-Stromableiter 3 erfolgt. Kurzschlüsse können die Folge sein.

Die umlaufende Zellendichtung 7 kann ein- oder mehrlippig ausgestaltet sein. Eine breite Ausführung der Zellendichtung 7 ist vorteilhaft, um prozessschwankungsbedingte Toleranzen ausgleichen zu können, bei denen dünne Dichtungen asymmetrisch von beiden Seiten auf die Siegelnaht 2 pressen und diese erhöhtem mechanischen Stress aussetzen würden. Typischerweise sollte die Zellendichtung 7 so gestaltet sein, dass sie die Siegelnaht 2 der Zelle so abdichtet, dass diese bei inneren Überdrücken oberhalb von 1 bar an den abgedichteten Stellen nicht öffnet.

Die Zellendichtung 7 ist bevorzugt aus elastomeren Werkstoffen mit geringem Setzverhalten gefertigt. Besonders bevorzugt können Silikonkautschuk-basierte Zellendichtungen 7 verwendet werden, die besonders im Hinblick auf Flammschutz gute Eigenschaften aufweisen.

Bei geringeren Ansprüchen an die Zellendichtung 7, beispielsweise bei einer begrenzten Lebensdauer einer Batterie oder bei kostengetriebenen Applikationen, kann auch auf thermoplastische Elastomere zurückgegriffen werden.

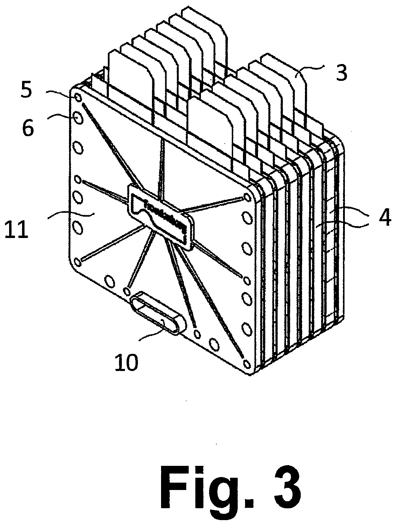

Fig. 3 zeigt eine Anordnung, nämlich einen Stapel oder Stack, bestehend aus mehreren Rahmen mit Rahmenkörpern 4, wobei jeweils zwischen zwei Rahmenkörpern 4 eine Pouch-Zelle gemäß Fig. 1 platziert ist.

Die Folien-Stromableiter 3 ragen aus den Rahmenkörpern 4 heraus. Auf beiden Seiten der Anordnung ist eine Deckplatte 11 angeordnet, welche den Stapel aus Zellen und Rahmen nach außen hin abschließt.

Diese Deckplatte 11 kann auch in ein Gehäuse integriert sein, d.h. ein Gehäuseteil, beispielsweise Wand, Boden oder Decke, kann die Funktion der Deckplatte 11 übernehmen.

In der Deckplatte 11 sind Durchführungsöffnungen 5 für Fixierstangen und integrierte Bohrungen 6 für Rohre enthalten.

Des weiteren ist eine Notabblasdurchführung 10 vorgesehen, durch welche mögliche, in den Abblaskanälen 9 gesammelte Störfallemissionen sicher aus dem Stack bzw. einem Gehäuse abgeführt werden können.

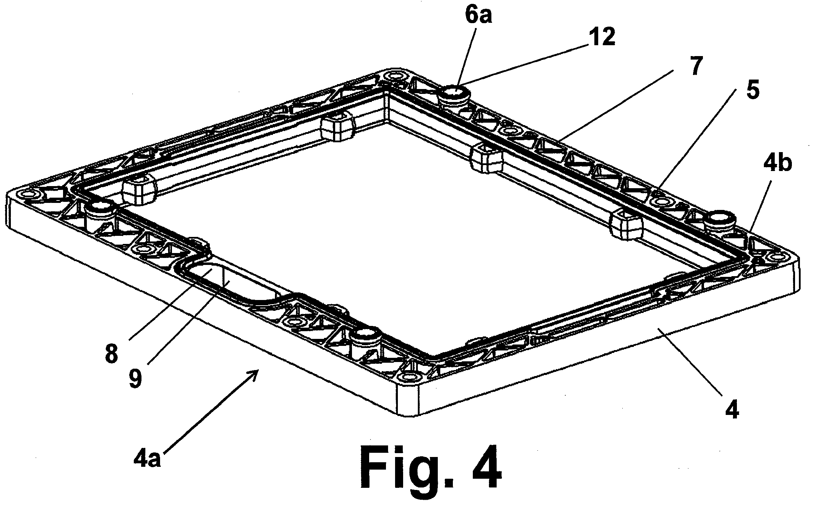

Fig. 4 zeigt einen Rahmen 4a zur Fixierung von Zellen, umfassend einen Rahmenkörper 4, in welchem mindestens ein Kühlkanal 6a für ein Kühlmedium ausgebildet ist.

Der Rahmen 4a weist mindestens ein Steckstück 12 zur Verbindung mit einem anderen Rahmen auf, wobei der Kühlkanal 6a zumindest teilweise innerhalb des Steckstücks 12 verläuft.

Das Steckstück 12 ragt zumindest teilweise derart aus einer Rahmenebene 4b heraus, dass es in eine komplementäre Öffnung eines Steckstücks eines benachbarten Rahmens hineinragen kann.

Das Steckstück 12 weist einen runden Querschnitt auf.

Die Kühlkanäle 6a weisen ebenfalls einen runden Querschnitt auf, wodurch eine Verbindung zu Schläuchen und Rohren außerhalb des Rahmens 4a besonders einfach herstellbar ist.

Fig. 4 zeigt einen Rahmen 4 mit Steckstücken 12 für den Kühlkreislauf. Bei der Assemblierung benachbarter Rahmen werden männliche Teile 13 von Steckstücken 12 in weibliche Teile 14, insbesondere Aussparungen, eingeführt.

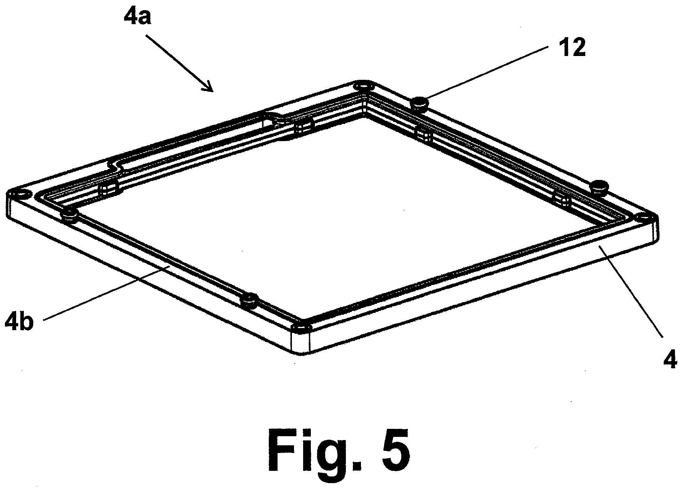

Fig. 5 zeigt den Rahmen 4a mit Steckstücken 12, die einen runden Querschnitt aufweisen.

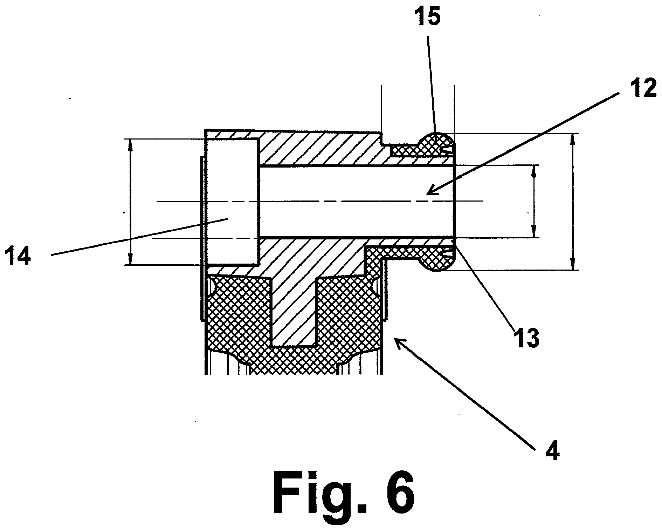

Fig. 6 zeigt ein im Rahmenkörper 4 integriertes Steckstück 12 im Querschnitt. Der männliche Teil 13 des Steckstücks 12 kann in einen weiblichen Teil des Steckstücks eines benachbarten Rahmens ragen. Hier ist dargestellt, dass der Rahmenkörper 4 auch ein solches weibliches Teil 14, nämlich eine Aussparung aufweist, in die der männliche Teil 14 eingeführt werden könnte.

Das Steckstück 12 weist zumindest eine Dichtung 15 auf. Das Steckstück 12 enthält eine elastomere Dichtung 15, die wulstartig auskragt. Das Steckstück 12 und die Dichtung 15 sind einstückig ausgebildet.

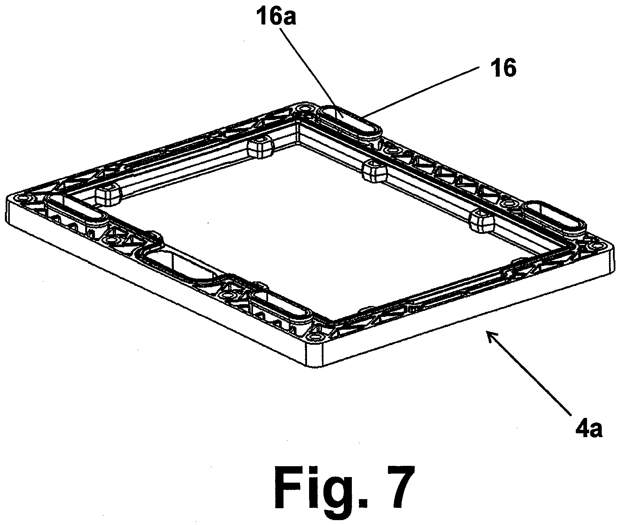

Fig. 7 zeigt einen Rahmen 4a mit unrunden Steckstücken 16. Die Kühlkanäle 16a der Steckstücke 16 können auch eine größere Breite aufweisen. Die Kühlkanäle 16a können im Querschnitt rechteckig oder oval sein. Dies ist insbesondere bei hohen Temperieranforderungen vorteilhaft.

In die Kühlkanäle 16a können zusätzliche, quer angeordnete Stege angebracht sein, welche die mechanische Stabilität erhöhen. Dies ist insbesondere bei geforderten hohen Innendrücken, beispielsweise bei Verwendung von teilfluorierten Medien oder Kohlendioxid als Kühlmedium, notwendig.

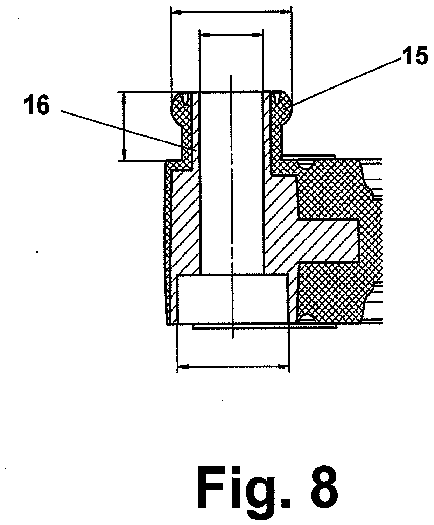

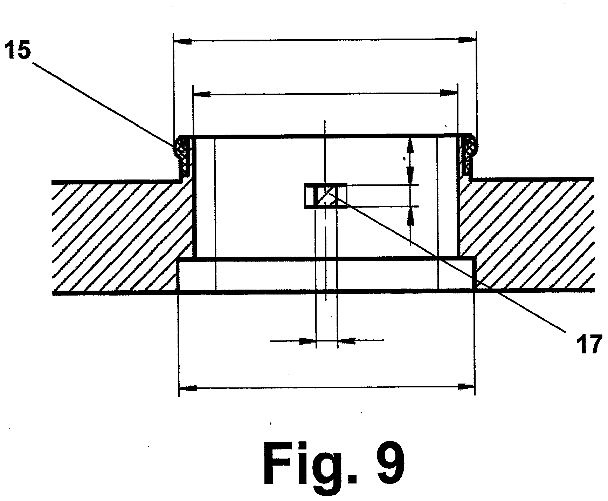

Fig. 8 und Fig. 9 zeigen Querschnitte eines annähernd rechteckigen Steckstücks 16. Der hier realisierte freie Querschnitt beträgt ca. 4 x 25 mm². Umlaufend ist eine elastomere Dichtung 15 aufgebracht.

Das Steckstück 16 ist mit innen angebrachten Verstrebungen 17 mechanisch stabilisiert. Zur Verbesserung der Stabilität sind Verstrebungen 17 angebracht. Diese Verstrebungen 17 können entweder strömungsreduziert ausgeführt werden oder aber als Wärmeübertragungselement.

Möglich ist zudem eine Fertigung des Steckstücks 16 aus einem anderen Material als das, aus dem der Rahmen 4a gefertigt ist. Das Steckstück 16 kann aus Metall gefertigt sein. Hierdurch ist eine bessere Wärmeübertragung bei gleichem Druckverlust realisierbar.

Denkbar ist auch, dass die zuvor genannte Verstrebung 17 als Strömungselement ausgeführt ist, die eine durchströmende Lösung an die zu temperierende Oberfläche oder Seite des Rahmens 4a leitet und somit den Wärmeübergang verbessert. Im konkreten Fall wäre diese die der Zelle zugewandte Seite des Rahmens 4a, nämlich die Innenseite. Es ist hierbei denkbar, Strömungsbleche und/ oder -plättchen zu verwenden.

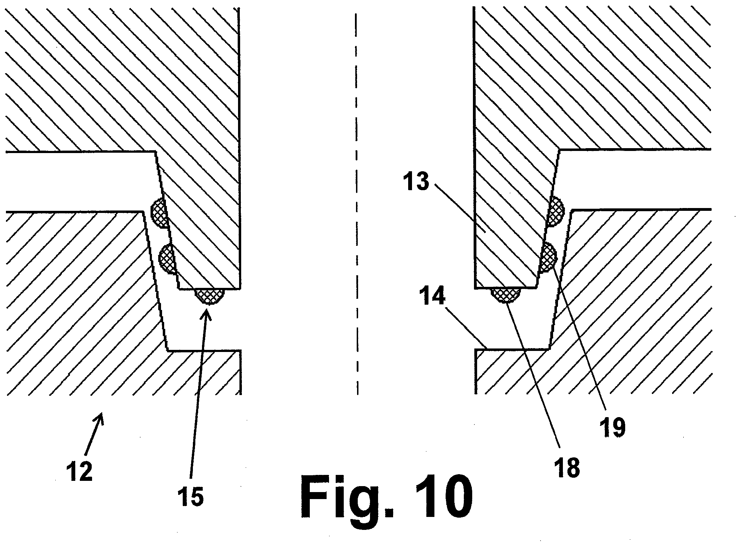

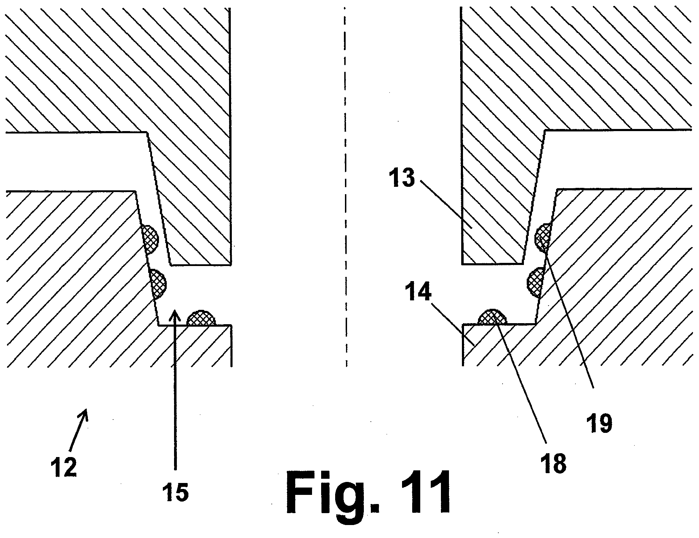

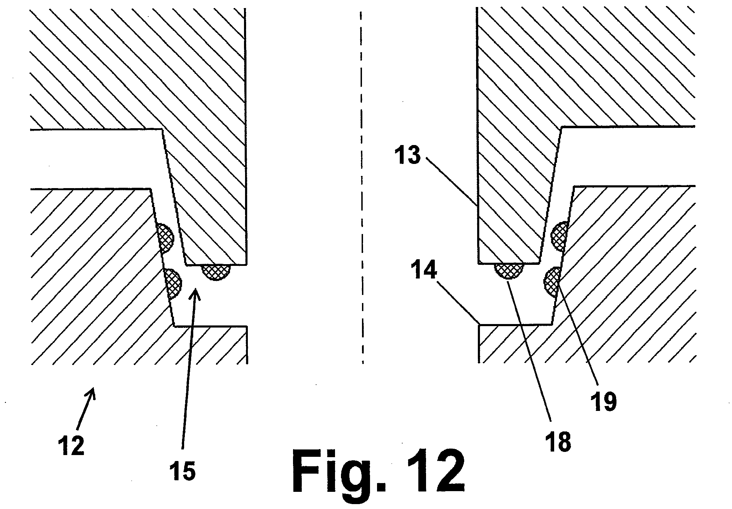

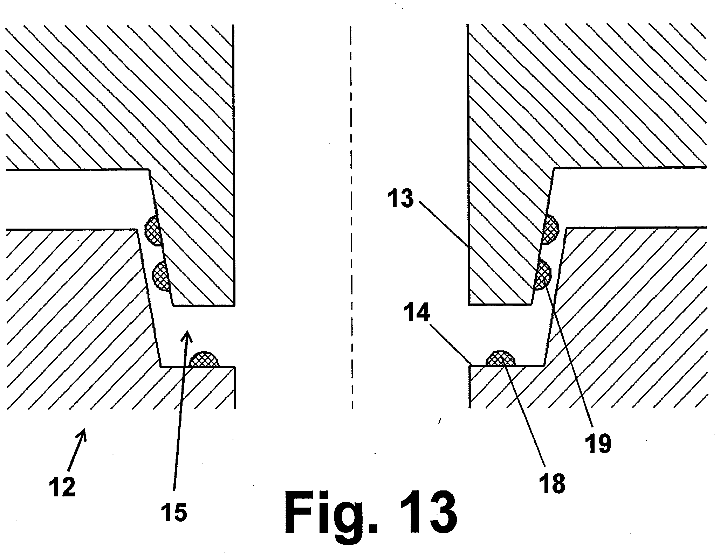

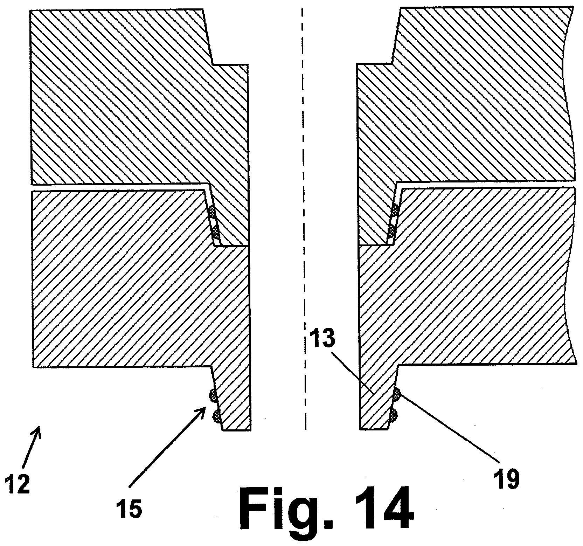

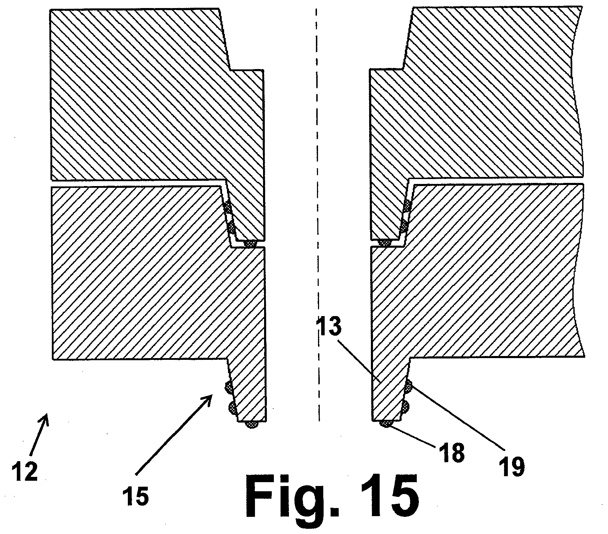

In den Fig. 10 bis 19 sind schematische Darstellungen der Dichtungen 15 in den Steckstücken 12 gezeigt. Ein Steckstück 12 weist eine Dichtung 15 auf, die radial und/ oder axial abdichtet. Eine Dichtung 15 umfasst hierzu mehrere Teildichtungen 18, 19. Eine solche Dichtung 15 ist daher mehrlippig ausgestaltet. Es sind axiale Teildichtungen 18 und radiale Teildichtungen 19 vorgesehen.

Die Steckstücke 12 können auch als Endanschlag benutzt werden.

Die Dichtungen 15 der Steckstücke 12 sind derart angeordnet, dass axial und radial dichtende Verbindung erzielt werden. Die Dichtungen 15 können hierbei ausschließlich am männlichen, ausschließlich am weiblichen oder am männlichen und am weiblichen Teil eines Steckstücks 12 angebracht sein.

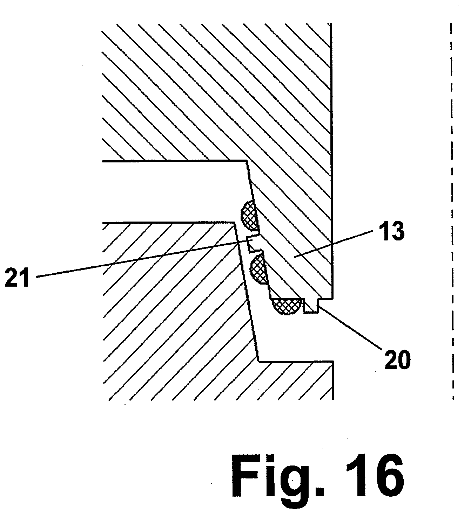

Fig. 16 zeigt, dass durch Anbringung zusätzlicher Rippen 20, 21, hier am männlichen Teil 13 eines Steckstücks 12, ein Endanschlag der Dichtung 15 sicher gestellt werden kann. Die Dichtung 15 liegt so im Kraftnebenschluss.

Hier dargestellt sind Endanschläge in axialer sowie radialer Richtung. Eine Rippe 20 wirkt in axialer Richtung, eine Rippe 21 wirkt in radialer Richtung. Denkbar sind auch Endanschläge, die nur in je einer Richtung wirken.

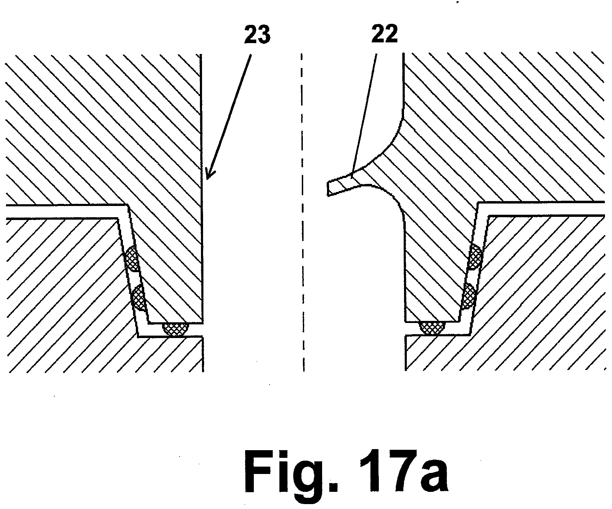

Fig. 17a zeigt schematisch, dass in mindestens einem Steckstück 12 ein Strömungsblech 22 angeordnet ist. Das Strömungsblech 22 ist in einem Kühlkanal 6a angeordnet, wobei die Strömung des Kühlmediums zu der der Zelle zugewandten Strömungsfläche 23 des Rahmens erfolgt.

In Fig. 17a ist außerdem dargestellt, dass in mindestens einem Steckstück 12 eine Strömungsfläche 23 angeordnet ist. Die Strömungsfläche 23 ist in Richtung eines Zellkörpers 1 angebracht.

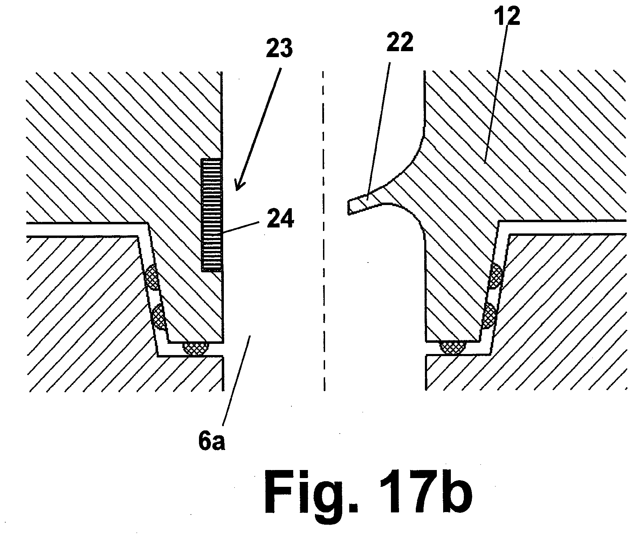

Fig. 17b zeigt, dass die Strömungsfläche 23 eine erhöhte Rauigkeit aufweist. Die Strömungsfläche 23 weist eine erhöhte thermische Leitfähigkeit auf. Dies wird durch Verwendung eines metallischen Einlegeteils 24, eines sogenannten Inserts, realisiert.

Bleche und eventuelle Gegenflächen können ausschließlich im männlichen Teil 13, ausschließlich im weiblichen Teil 14 oder jeweils in einem der beiden Teile 13, 14 realisiert werden. Bei Verwendung eines Zwei-Komponenten-Herstellprozesses sind derartige Ausführungen leicht und nahezu ohne Mehraufwand, beispielsweise unter Verwendung von Inserts, herstellbar. Denkbar ist zudem, Bleche als strukturverstärkende Elemente zu nutzen.

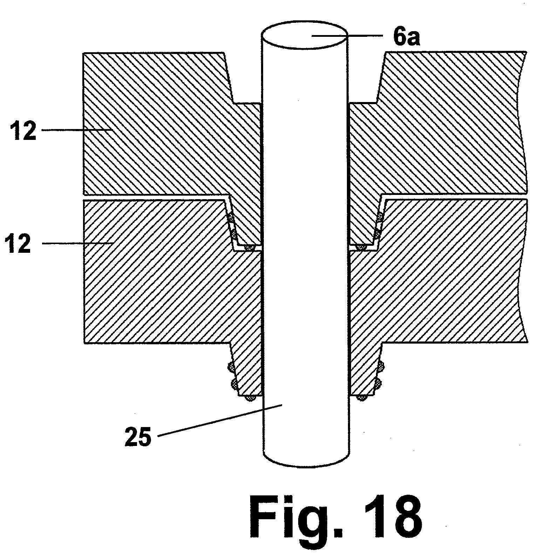

Fig. 18 zeigt eine Anordnung, bei welcher durch die Steckstücke 12 mindestens ein Rohr 25 geführt ist, in welchem der Kühlkanal 6a ausgebildet ist.

In Fig. 18 ist die Platzierung eines separaten Rohrs 25 in Öffnungen im Rahmen 4a dargestellt. Die Verbindung zwischen den Rahmen 4a kann dabei nach einer der zuvor beschriebenen Möglichkeiten erfolgen. Hierdurch wird eine komplette Trennung von Kühlkreislauf und Rahmen 4a hergestellt. Es besteht eine hohe Sicherheit gegenüber Leckage. Es wird zudem eine erhöhte Stabilität geschaffen, da die Rohre 25 zur Stabilitätsverbesserung beitragen.

Es kann keine Permeation des Kühlmediums durch die Dichtung 15 stattfinden. Das Dichtungsmaterial braucht daher nicht beständig gegenüber Kühlmedium zu sein. Es ist beispielsweise eine Verwendung von thermoplastischen Elastomeren möglich. Ein System kann auch für hohe Drücke ausgelegt sein. So ist eine Verwendung von teilfluorierten Kühlmedien oder auch von Kohlendioxid als Kühlmedium möglich.

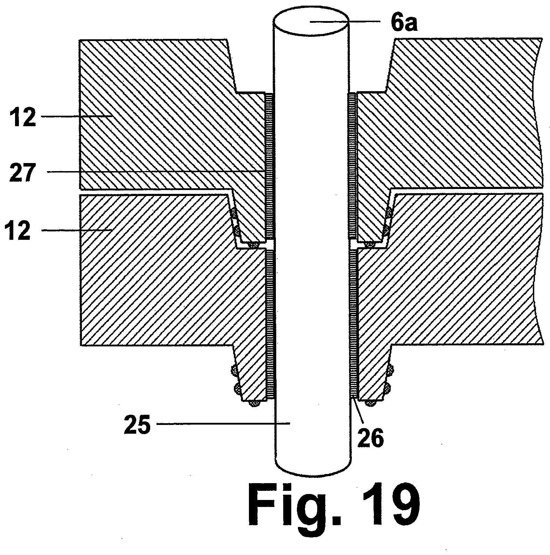

Fig. 19 zeigt eine Anordnung, bei welcher das Rohr 25 durch je eine Öffnung eines Steckstücks 12 geführt ist, wobei zwischen dem Rohr 25 und der Innenwand 27 mindestens einer Öffnung ein toleranzausgleichendes Mittel 26 angeordnet ist.

Fig. 19 zeigt die Platzierung eines separaten Rohrs 25 in Öffnungen eines Rahmens 4a. Zwischen dem Rohr 25 und der Innenwand 27 einer Öffnung ist als toleranzausgleichendes Mittel 26 eine ausgleichende Schicht platziert, die einen Formschluss zwischen Rohr 25 und Rahmen 4a sicherstellt. Dadurch wird der Wärmeübergang optimiert.

Die Schicht kann ein wärmeleitendes Elastomer aufweisen. Hierbei ist ein Ausgleichsvolumen für das Elastomer im Bereich zwischen den Rahmen 4a sinnvoll. Die Schicht kann ein wärmeleitendes thermoplastisches Elastomer aufweisen. Auch hierbei ist ein Ausgleichsvolumen für das Elastomer im Bereich zwischen den Rahmen 4a sinnvoll. Es kann auch ein wärmeleitender Elastomerschaum zur Anwendung kommen. In diesem Fall kann auf ein separates Ausgleichsvolumen verzichtet werden, da der Schaum in seiner Struktur komprimierbar ist.

Weiter ist denkbar, ein externes Gehäuse in den Kanal 6a einzubeziehen. Es ist eine Anbindung des ersten oder letzten Rahmens 4a an das Gehäuse denkbar.

Es ist eine zusätzliche Verclipsung der Rahmen 4a und/ oder Steckstücke 12 möglich. Hierdurch lässt sich eine zusätzliche Sicherheitsfunktion realisieren, da benachbarte Rahmen 4a nicht ohne Krafteinwirkung voneinander getrennt werden können.

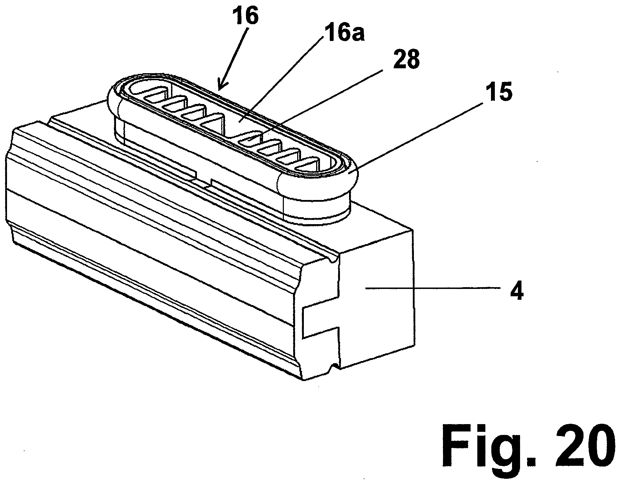

Fig. 20 zeigt, dass in mindestens einem Steckstück 16 eine Wärmeleitrippe 28 angeordnet ist.

Fig. 20 zeigt das in Fig. 7 dargestellte annähernd rechteckig ausgeführte Steckstück 16, in welchem zur Verbesserung des Wärmeübergangs im Strömungskanal 16a Wärmeleitrippen 28 angebracht sind. Dadurch wird der Wärmeübergang zwischen dem durchströmenden Kühlmedium und dem Rahmenkörper 4 verbessert. Die Wärmeleitrippen 28 können dabei an der der Zelle zugewandten Seite des Rahmens 4a angebracht sein.

Die Wärmeleitrippen 28 können dabei aus einem Rahmenmaterial bestehen, welches eine kostengünstige und einfache Produktion erlaubt. Alternativ können die Wärmeleitrippen 28 aus einem thermisch besonders leitfähigen Material, insbesondere aus Metallen, bestehen.

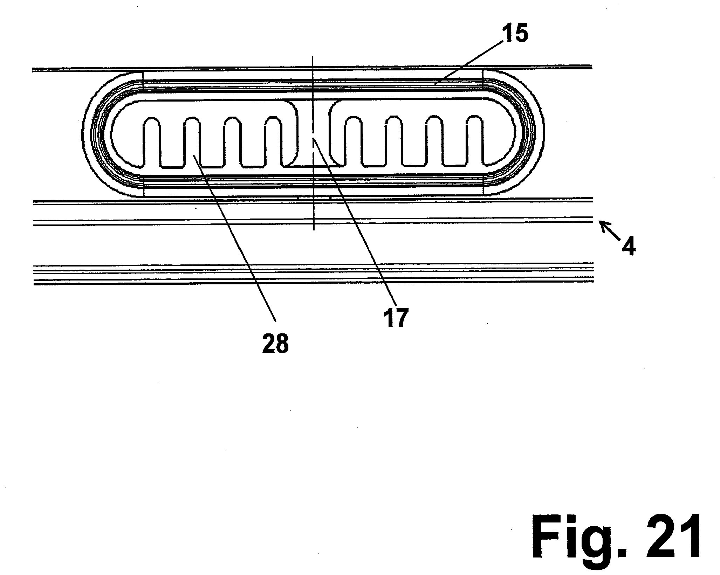

Fig. 21 zeigt ein zu dem in Fig. 20 dargestellten analoges Steckstück 16, in welchem neben Wärmeleitrippen 28 mechanisch verstärkende Verstrebungen 17 angebracht sind. Diese Verstrebungen 17 wurden bereits mit Bezug auf Fig. 9 beschrieben.

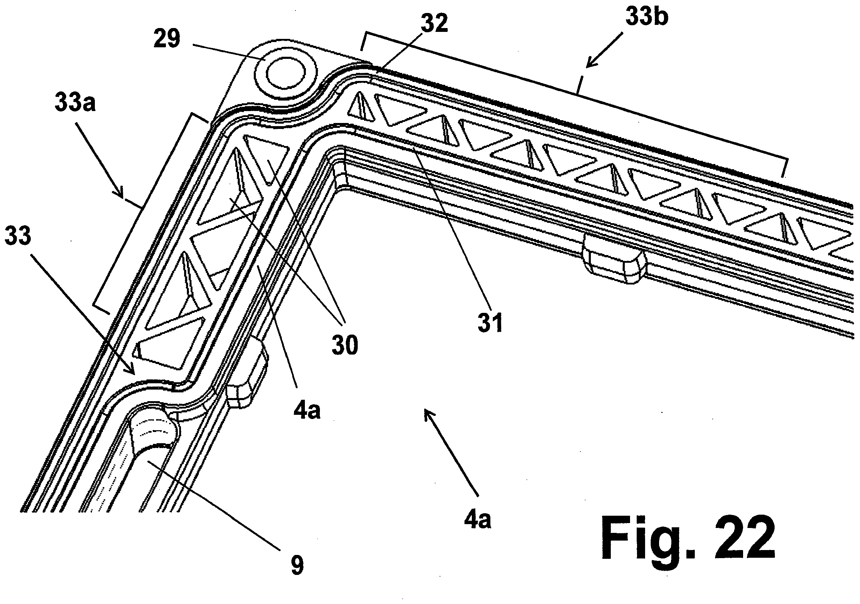

Fig. 22 zeigt einen Rahmen 4a mit einer bestmöglichen Kühlwirkung. Solche Rahmen 4a werden durch metallische Verstärkungen 29 miteinander verbunden. Das Kühlmedium strömt senkrecht durch die Rahmenebene 4b durch fachwerkartige Aussparungen 30.

Die Abdichtung nach innen hin wird durch eine umlaufende Innendichtung 31 sichergestellt. Die Abdichtung nach außen hin wird durch eine parallel umlaufende Außendichtung 32 sichergestellt.

Im Bereich der Abblaskanäle 9 können die Innendichtung 31 und die Außendichtung 32 weiterhin parallel verlaufen, wie in Fig. 22. Dargestellt, oder aber im Bereich einer Schnittstelle 33 zueinander finden, so dass der Abblaskanal 9 ausgespart ist.

Denkbar ist auch, dass die fachwerkartige, vom Kühlmedium umströmte Struktur abschnittsweise aus der Rahmenebene 4b herausragt und, wie analog in Fig. 7 dargestellt, in Aussparungen eines benachbarten Rahmens 4a hineinragt. Hierbei muss wiederum die herausragende Struktur umlaufend abgedichtet sein. Die herausragende Struktur kann kurze Abschnitte 33a oder auch lange Abschnitte 33b des Umfangs umfassen.

## Patentansprüche

1. Rahmen (4a) zur Fixierung von Zellen, umfassend einen Rahmenkörper (4), in welchem mindestens ein Kühlkanal (6a, 16a) für ein Kühlmedium ausgebildet ist, wobei der Rahmen (4a) mindestens ein Steckstück (12, 16) zur Verbindung mit einem anderen Rahmen (4a) aufweist, wobei der Kühlkanal (6a, 16a) zumindest teilweise innerhalb des Steckstücks (12, 16) verläuft, wobei das Steckstück (12, 16) zumindest teilweise derart aus der Rahmenebene (4b) herausragt, dass es in eine komplementäre Öffnung eines Steckstücks (12, 16) eines benachbarten Rahmens (4a) hineinragen kann und dass das Steckstück (12, 16) zumindest eine Dichtung (15) aufweist, **dadurch gekennzeichnet, dass** die Dichtung (15) radial abdichtet.

2. Rahmen nach Anspruch 1, **dadurch gekennzeichnet, dass** das Steckstück (12, 16) einen runden oder rechteckigen Querschnitt aufweist.

3. Rahmen nach einem der voranstehenden Ansprüche, **dadurch gekennzeichnet, dass** das Steckstück (12, 16) einen männlichen Teil (13) und einen weiblichen Teil (14) aufweist, wobei der männliche Teil (13) geeignet ist, in den weiblichen Teil (14) eines benachbarten Rahmens (4a) eingeführt zu werden und wobei der weibliche Teil (14) geeignet ist, den männlichen Teil (13) eines benachbarten Rahmens (4a) aufzunehmen.

4. Rahmen nach Anspruch 1, **dadurch gekennzeichnet, dass** das Steckstück (12, 16) und die Dichtung (15) einstückig ausgebildet sind.

5. Rahmen nach einem der Ansprüche 1 oder 4, **dadurch gekennzeichnet, dass** die Dichtung (15) O-Ringe oder Einlegeteile aufweist.

6. Rahmen nach Anspruch 1, 4 oder 5, **dadurch gekennzeichnet, dass** die Dichtung (15) mehrere Teildichtungen (18, 19) umfasst, nämlich mehrlippig ausgestaltet ist.

7. Rahmen nach einem der voranstehenden Ansprüche, **dadurch gekennzeichnet, dass** er Drücken bis maximal 10 bar, bevorzugt bis maximal 30 bar, besonders bevorzugt bis maximal 130 bar standhält.

8. Rahmen nach einem der voranstehenden Ansprüche, **dadurch gekennzeichnet, dass** in mindestens einem Steckstück (12, 16) ein Strömungsblech (22) angeordnet ist.

9. Rahmen nach einem der voranstehenden Ansprüche, **dadurch gekennzeichnet, dass** in mindestens einem Steckstück (12, 16) eine Wärmeleitrippe (28) angeordnet ist.

10. Rahmen nach einem der voranstehenden Ansprüche, **dadurch gekennzeichnet, dass** in mindestens einem Steckstück (12, 16) ein Verclipsungselement ausgebildet ist.

11. Rahmen nach einem der voranstehenden Ansprüche, **dadurch gekennzeichnet, dass** das Steckstück (16) mit innen angebrachten Verstrebungen (17) mechanisch stabilisiert ist

12. Anordnung, umfassend mindestens zwei Rahmen (4a) nach einem der voranstehenden Ansprüche, wobei zwischen den Rahmen (4a) eine Zelle angeordnet ist, wobei ein männliches Teil (13) eines ersten Steckstücks (12) in ein weibliches Teil (14) eines zweiten Rahmens (4a) hineinragt und wobei durch die Steckstücke (12) ein Kühlkanal (6a) für ein Kühlmedium geführt ist.

13. Anordnung nach dem voranstehenden Anspruch, **dadurch gekennzeichnet, dass** eine Dichtung, die an einem männlichen Teil (13) und/oder weiblichen Teil (14) angeordnet ist, im Krafthauptschluss oder im Kraftnebenschluss liegt.

14. Anordnung nach Anspruch 12 oder 13, **dadurch gekennzeichnet, dass** durch die Steckstücke (12) mindestens ein Rohr (25) geführt ist, in welchem der Kühlkanal (6a) ausgebildet ist.

15. Anordnung nach Anspruch 14, **dadurch gekennzeichnet, dass** das Rohr (25) durch je eine Öffnung eines Steckstücks (12) geführt ist, wobei zwischen dem Rohr (25) und der Innenwand mindestens einer Öffnung ein toleranzausgleichendes Mittel (26) angeordnet ist.

16. Anordnung nach einem der Ansprüche 12 bis 15, **dadurch gekennzeichnet, dass** ein externes Gehäuse Teil eines Kühlkanals (6a, 16a) ist, wobei ein Steckstück (12, 16) eines letzten Rahmens (4a) in eine Bohrung des Gehäuses eingeführt ist.

17. Batteriesystem, umfassend eine Anordnung nach einem der Ansprüche 12 bis 15.

## Claims

1. Frame (4a) for fixing cells, comprising a frame body (4), in which is formed at least one cooling channel (6a, 16a) for a cooling medium, wherein the frame (4a) has at least one plug-in component (12, 16) for connecting to another frame (4a), wherein the cooling channel (6a, 16a) runs, at least in part, within the plug-in component (12, 16), wherein the plug-in component (12, 16) projects, at least in part, out of the frame plane (4b) such that it can project into a complementary opening of a plug-in component (12, 16) of an adjacent frame (4a) and that the plug-in component (12, 16) has at least one seal (15), **characterized in that** the seal (15) provides radial sealing.

2. Frame according to Claim 1 **characterized in that** the plug-in component (12, 16) has a round or rectangular cross section.

3. Frame according to one of the preceding claims, **characterized in that** the plug-in component (12, 16) has a male part (13) and a female part (14), wherein the male part (13) is suitable for being introduced into the female part (14) of an adjacent frame (4a) and wherein the female part (14) is suitable for accommodating the male part (13) of an adjacent frame (4a).

4. Frame according to Claim 1, **characterized in that** the plug-in component (12, 16) and the seal (15) are formed in one piece.

5. Frame according to either of Claims 1 and 4, **characterized in that** the seal (15) has O rings or insert parts.

6. Frame according to one of Claims 1, 4 or 5, **characterized in that** the seal (15) comprises a plurality of sub-seals (18, 19), that is to say it is configured with a plurality of lips.

7. Frame according to one of the preceding claims, **characterized in that** it withstands pressures up to a maximum of 10 bar, preferably up to a maximum of 30 bar, particularly preferably up to a maximum of 130 bar.

8. Frame according to one of the preceding claims, **characterized in that** a flow plate (22) is arranged in at least one plug-in component (12, 16).

9. Frame according to one of the preceding claims, **characterized in that** a heat-conducting rib (28) is arranged in at least one plug-in component (12, 16).

10. Frame according to one of the preceding claims, **characterized in that** a clipping element is formed in at least one plug-in component (12, 16).

11. Frame according to one of the preceding claims, **characterized in that** the plug-in component (16) is stabilized mechanically by internal strut formations (17) .

12. Arrangement comprising at least two frames (4a) according to one of the preceding claims, wherein a cell is arranged between the frames (4a), wherein a male part (13) of a first plug-in component (12) projects into a female part (14) of a second frame (4a), and wherein a cooling channel (6a) for a cooling medium is led through the plug-in components (12).

13. Arrangement according to the preceding claim, **characterized in that** a seal arranged on a male part (13) and/or female part (14) is in main frictional connection or in secondary frictional connection.

14. Arrangement according to Claim 12 or 13, **characterized in that** at least one tube (25), in which the cooling channel (6a) is formed, is led through the plug-in components (12).

15. Arrangement according to Claim 14, **characterized in that** the tube (25) is led through a respective opening of a plug-in component (12), wherein a tolerance-compensating means (26) is arranged between the tube (25) and the inner wall of at least one opening.

16. Arrangement according to one of Claims 12 to 15, **characterized in that** an external housing is part of a cooling channel (6a, 16a), wherein a plug-in component (12, 16) of a final frame (4a) is introduced into a bore of the housing.

17. Battery system comprising an arrangement according to one of Claims 12 to 15.

## Revendications

1. Cadre (4a) pour la fixation de cellules, comprenant un corps de cadre (4) dans lequel est réalisé au moins un canal de refroidissement (6a, 16a) pour un réfrigérant, le cadre (4a) présentant au moins une pièce enfichable (12, 16) pour la connexion à un autre cadre (4a), le canal de refroidissement (6a, 16a) s'étendant au moins en partie à l'intérieur de la pièce enfichable (12, 16), la pièce enfichable (12, 16) faisant saillie au moins en partie hors du plan du cadre (4b) de telle sorte qu'elle puisse pénétrer dans une ouverture complémentaire d'une pièce enfichable (12, 16) d'un cadre adjacent (4a) et que la pièce enfichable (12, 16) présente au moins un joint d'étanchéité (15), **caractérisé en ce que** le joint d'étanchéité (15) assure l'étanchéité radialement.

2. Cadre selon la revendication 1, **caractérisé en ce que** la pièce enfichable (12, 16) présente une section transversale ronde ou rectangulaire.

3. Cadre selon l'une quelconque des revendications précédentes, **caractérisé en ce que** la pièce enfichable (12, 16) présente une partie mâle (13) et une partie femelle (14), la partie mâle (13) étant appropriée pour être introduite dans la partie femelle (14) d'un cadre adjacent (4a) et la partie femelle (14) étant apte à recevoir la partie mâle (13) d'un cadre adjacent (4a).

4. Cadre selon la revendication 1, **caractérisé en ce que** la pièce enfichable (12, 16) et le joint d'étanchéité (15) sont réalisés d'une seule pièce.

5. Cadre selon l'une quelconque des revendications 1 ou 4, **caractérisé en ce que** le joint d'étanchéité (15) présente des joints toriques ou des pièces d'insertion.

6. Cadre selon la revendication 1, 4 ou 5, **caractérisé en ce que** le joint d'étanchéité (15) comprend plusieurs joints d'étanchéité partiels (18, 19), à savoir est réalisé avec plusieurs lèvres.

7. Cadre selon l'une quelconque des revendications précédentes, **caractérisé en ce qu'**il peut résister à des pressions maximales allant jusqu'à 10 bars, de préférence jusqu'à 30 bars, particulièrement préférablement jusqu'à 130 bars.

8. Cadre selon l'une quelconque des revendications précédentes, **caractérisé en ce que** dans au moins une pièce enfichable (12, 16) est disposée une tôle de chicane (22).

9. Cadre selon l'une quelconque des revendications précédentes, **caractérisé en ce que** dans au moins une pièce enfichable (12, 16) est disposée une ailette conduisant la chaleur (28).

10. Cadre selon l'une quelconque des revendications précédentes, **caractérisé en ce que** dans au moins une pièce enfichable (12, 16) est réalisé un élément d'enclipsage.

11. Cadre selon l'une quelconque des revendications précédentes, **caractérisé en ce que** la pièce enfichable (16) est stabilisée mécaniquement avec des renforts (17) montés à l'intérieur.

12. Agencement comprenant au moins deux cadres (4a) selon l'une quelconque des revendications précédentes, une cellule étant disposée entre les cadres (4a), une partie mâle (13) d'une première pièce enfichable (12) pénétrant dans une partie femelle (14) d'un deuxième cadre (4a) et un canal de refroidissement (6a) pour un réfrigérant étant guidé à travers les pièces enfichables (12).

13. Agencement selon la revendication précédente, **caractérisé en ce qu'**un joint d'étanchéité qui est disposé au niveau d'une partie mâle (13) et/ou d'une partie femelle (14), est en engagement principal par force ou en engagement secondaire par force.

14. Agencement selon la revendication 12 ou 13, **caractérisé en ce qu'**au moins un tube (25) est guidé à travers les pièces enfichables (12), dans lequel tube est réalisé le canal de refroidissement (6a).

15. Agencement selon la revendication 14, **caractérisé en ce que** le tube (25) est guidé à travers une ouverture respective d'une pièce enfichable (12), un moyen (26) compensant les tolérances étant disposé entre le tube (25) et la paroi interne d'au moins une ouverture.

16. Agencement selon l'une quelconque des revendications 12 à 15, **caractérisé en ce qu'**un boîtier externe fait partie d'un canal de refroidissement (6a, 16a), une pièce enfichable (12, 16) d'un dernier cadre (4a) étant introduite dans un alésage du boîtier.

17. Système de batterie, comprenant un agencement selon l'une quelconque des revendications 12 à 15.
